# EUROPEAN PATENT APPLICATION

(11) **EP 3 037 730 A2**
(43) Date of publication of application: **29.06.2016**
(21) Application number: 15199920.8
(22) Date of filing: 14.12.2015
(51) Int. Cl.: F23R 3/28, F02C 7/232

(54) **EDUCTOR FUEL PURGING SYSTEM FOR A TURBOMACHINE**

(30) Priority: 24.12.2014 US 201414582394
(71) Applicant: General Electric Company, Schenectady, NY 12345 (US)
(72) Inventor: AUSTIN, Kenneth Robert, Houston, TX Texas 77015 (US); NGUYEN, Tu, Houston, TX Texas 77015 (US); HUYNH, Tuy Cam, Houston, TX Texas 77015 (US)
(74) Representative: Lee, Brenda

(57) **Abstract**

A system includes a fuel premixer configured to distribute a fuel to a combustor and a purge system (40) configured to purge the fuel from the fuel premixer. The purge system (40) includes a discharge line (50) configured to receive a flow of a purge mixture (70) from the fuel premixer. The purge system (40) includes an orifice (72) coupled to the discharge line (50) and an eductor (46) having an interior (76), an opening (56), and an outlet (78). The orifice (72) is configured to constrict the flow of the purge mixture (70). The interior (76) is fluidly coupled to the orifice (72), to the opening (56), and to the outlet (78). The purge mixture (70) is configured to flow through the interior (76) from the orifice (72) to the outlet (78), the flow of the purge mixture (70) through the orifice (72) is configured to draw coolant (79) into interior (76) of the eductor (46) through the opening (56), and the coolant (79) drawn through the opening (56) is configured to mix with the purge mixture (70).

## Description

### BACKGROUND

The subject matter disclosed herein relates to turbomachines, such as gas turbine engines. More particularly, the present disclosure relates to a fuel purge system for purging and cooling fuel (e.g., liquid fuel) from a turbomachine, such as a gas turbine engine.

Turbomachines often include combustors configured to combust fuel with an oxidant, such as air. One or more fuel manifolds and one or more fuel premixers (which may be parts of one or more fuel nozzles) are configured to distribute one or more types of fuel to each of the combustors. After delivery of fuel to the combustors, residual fuel may remain in the fuel manifolds and/or fuel premixers. For example, residual fuel may stick to internal walls or surfaces of the fuel premixers. Residual fuel may form deposits that could obstruct fuel flow through the premixers. Unfortunately, the residual fuel can cause clogging of the fuel premixers and/or manifolds, or passages extending between the fuel premixers and the manifolds.

### BRIEF DESCRIPTION

Certain embodiments commensurate in scope with the present disclosure are summarized below. These embodiments are not intended to limit the scope of the disclosure, but rather these embodiments are intended only to provide a brief summary of possible forms of the disclosure. Indeed, the invention may encompass a variety of forms that may be similar to or different from the embodiments set forth below.

In a first embodiment, a system includes first fuel premixer configured to distribute a first fuel to a combustor and a purge system configured to purge the first fuel from the first fuel premixer. The purge system includes a discharge line configured to receive a flow of a purge mixture from the first fuel premixer. The purge system also includes an orifice coupled to the discharge line, where the orifice is configured to constrict the flow of the purge mixture. Further, the purge system includes an eductor having an interior, an opening, and an outlet, where the interior is fluidly coupled to the orifice, to the opening, and to the outlet, the purge mixture is configured to flow through the interior from the orifice to the outlet, the flow of the purge mixture through the orifice is configured to, by way of the Venturi effect, draw coolant into interior of the eductor through the opening, and the coolant drawn through the opening is configured to mix with the purge mixture.

In a second embodiment, a purge system for a turbomachine includes a discharge line configured to receive a flow of a purge mixture from a fuel premixer. The purge system also includes an orifice coupled to the discharge line, where the orifice is configured to constrict the flow of the purge mixture. The purge system also includes an eductor, where the eductor includes an interior fluidly coupled openings in the eductor, the orifice, and an outlet. The eductor includes the openings configured to receive a coolant. The eductor also includes the outlet. The purge mixture is configured to flow through the interior from the orifice to the outlet, and the flow of the purge mixture through the orifice is configured to, by way of the Venturi effect, draw the coolant into the eductor through the openings of the eductor.

In a third embodiment, a purge system for a turbomachine includes a discharge line having an orifice and configured to receive a purge mixture from a fuel premixer of the turbomachine, where the purge mixture includes a fuel and compressed air from a compressor of the turbomachine. The purge system also includes an eductor coupled to the discharge line, where the eductor includes at least one eductor opening for drawing in ambient air as the purge mixture flows through the orifice into the eductor.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic view illustrating a turbomachine in accordance with present embodiments;
FIG. 2 is a cross-sectional view of an embodiment of a purge system having an eductor for purging fuel from one or more fuel premixers, fuel manifolds, or fuel passageways, for use in the turbomachine of FIG. 1;
FIG. 3 is a cross-sectional view of an embodiment of an eductor for use in the purge system of FIG. 2;
FIG. 4 is a cross-sectional front view of the eductor of FIG. 3 taken along lines 4-4; and
FIG. 5 is a cross-sectional front view of an embodiment of an eductor; and
FIG. 6 is a process flow diagram illustrating an embodiment of a method for purging fuel from a fuel manifold.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments are directed to turbomachines and fuel purge systems for turbomachines, such as gas turbine engines. In particular, present embodiments are directed to a system for purging fuel (e.g., liquid fuel) from a fuel manifold or fuel premixer (or a passage extending between the fuel manifold and the fuel premixer) of a turbomachine, such as a gas turbine engine. For example, one or more combustors of the turbomachine combust one or more fuels with an oxidant, such as air or oxygen. A fuel manifold and one or more fuel premixers (which may be parts of fuel nozzles) deliver the fuel to the one or more combustors. For example, the fuel manifold distributes fuel to the fuel premixers, which may mix the fuel with air (e.g., oxygen). The fuel or fuel-air mixture reacts within the combustors to produce combustion products.

In some embodiments, one or more fuel premixers distribute a pilot fuel to the combustors for an ignition portion (and/or startup portion) of the combustion process (e.g., while the gas turbine is in startup mode). Then, fuel premixers distribute a burn fuel to continue the combustion process (e.g., to transition the gas turbine from the startup mode to a steady state mode). The pilot fuel and the burn fuel may be different, and each fuel may be configured to enhance efficiency of their respective portions of the combustion process (e.g., startup and steady state modes of the gas turbine). In some embodiments, a first fuel manifold may distribute the pilot fuel to the fuel premixers, and a second fuel manifold may distribute the burn fuel to the fuel premixers. In other embodiments, a single type of fuel may be used for the duration of the combustion process. In either configuration, it may be desirable to purge residual fuel in the fuel manifold, fuel premixers, or fuel passageways extending between the fuel manifold and fuel premixers after delivering the fuel to the combustors, such as during shut down or maintenance intervals, or when the portions of the gas turbine directed to delivering fuel are not being used (e.g., after transition from startup to steady state) but still during operation of the gas turbine. Purging the fuel from the fuel manifolds, the fuel premixers, and/or passages or conduits between the fuel manifolds and fuel premixers may reduce or eliminate residual fuel that may block portions of the fuel manifold, fuel premixers, or fuel passages/conduits. Additionally, or in the alternate, residual fuel may coke (e.g., form deposits) within the fuel manifolds, fuel premixers, or fuel passages, which may reduce an efficiency of the gas turbine engine. Purging the fuel may reduce or eliminate coking of fuel in the fuel manifolds or fuel premixers.

In accordance with present embodiments, a purge system is configured to purge the fuel from the fuel manifolds and/or fuel premixers coupled to the fuel manifolds via the fuel passageways. For simplicity, embodiments of the purge system described with reference to the figures will be referred to as a purge system for purging fuel from the fuel premixers, in particular. However, it should be noted that the purge system may also purge fuel from the one or more fuel manifolds (or mini-manifolds thereof), fuel conduits (e.g., passageways), or a combination thereof. For example, each fuel manifold (e.g., for each type of fuel) may include an annular ring configured to distribute fuel to each fuel premixer coupled to the annular ring, where each fuel premixer or nozzle associated with each fuel premixer injects the fuel (and air) into a corresponding one of the combustors. In certain types of dual fuel systems, a different manifold may distribute a different type of fuel to the same fuel premixers. Alternatively, each fuel manifold may distribute its respective type of fuel to a different fuel premixer for each combustor. In general, presently disclosure purge systems may be capable of purging fuel from any fuel manifold and any fuel premixer of any turbomachine, for example, a gas turbine engine.

The purge system, in accordance with present embodiments, may include a purge mechanism configured to route a fluid (e.g., compressed air) through, for example, the fuel premixers. Further, the purge system may include a purge segment that is a bi-directional flow segment of a fuel passageway or conduit that couples between and routes fuel between the fuel manifold and the fuel premixers. Thus, when the fuel manifold delivers fuel to the fuel premixer, the bi-directional purge segment enables the fuel to travel through the bi-directional purge segment to the premixer. When fuel and/or other fluid (e.g., compressed air) is being purged from the fuel premixer, the bi-directional purge segment enables the fuel and/or air to travel through the bi-directional purge segment of the fuel passageway toward the manifold. A juncture in the fuel passageway (e.g., at an end of the bi-directional purge segment) may include a valve or some other flow regulation device that enables the purged fuel and/or air to be routed to a discharge line coupled to the fuel passageway at the juncture.

The purged fuel and air may travel through the discharge line toward an eductor of the purge system, where the eductor is coupled to the discharge line. For example, the discharge line may include an orifice at an end of the discharge line proximate to the eductor, where the orifice is disposed in an inside of the eductor. The orifice generates a pressure drop within the eductor as the purged fuel and compressed fluid (e.g., compressed air) flows through the orifice. The pressure drop may enable ambient air (or some other cooling fluid, such as nitrogen) to be drawn into the eductor through an eductor opening of the eductor. The cooling fluid is configured to mix with the mixture of compressed air and purged fuel, cooling the mixture, which may be hot and otherwise susceptible to combustion. In other words, the cooling fluid (e.g., ambient air or nitrogen) being drawn into the eductor is configured to cool the mixture of compressed air discharge and purged fuel to reduce or negate a susceptibility of the mixture combusting. The mixture of compressed air, purged fuel, and ambient air or nitrogen is routed to a drain pan via a drain line or to a separator that separates and vents and non-fuel contents in the mixture before delivering the fuel contents to the drain pan. In some embodiments, cooling the compressed air and purged fuel with ambient air or nitrogen drawn through the eductor enables the elimination of traditional heat transfer equipment (e.g., heat exchangers, coolers, flame arrestors), thereby reducing the footprint and cost of the purge system.

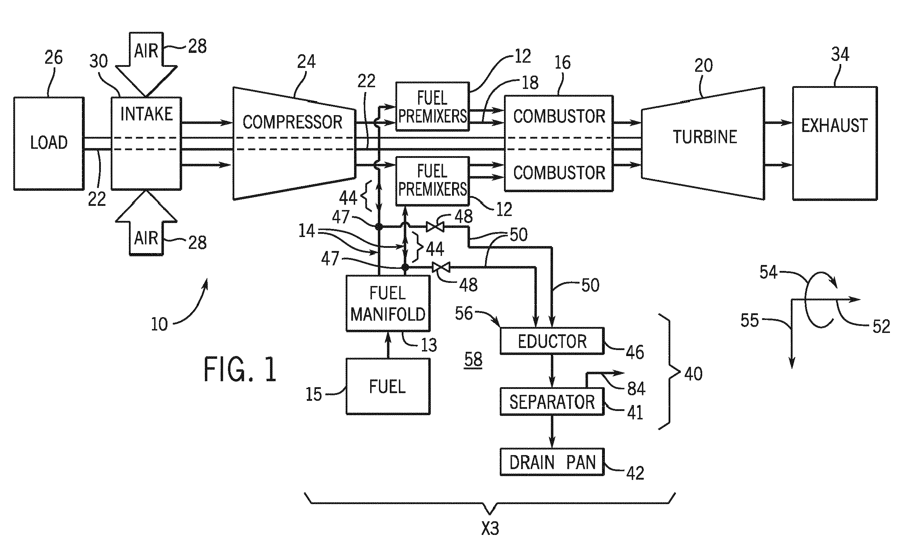

Turning now to the drawings and referring first to FIG. 1, a block diagram of an embodiment of a turbomachine 10 (e.g., a gas turbine engine) is illustrated. It should be noted that the present disclosure may relate to any turbomachine system, and that the gas turbine engine 10 discussed herein does not limit the scope by which the present disclosure applies. A turbomachine system may relate to any system that involves the transfer of energy between a rotor and a fluid, or vice versa, and the illustrated gas turbine engine 10 is only meant to serve as a representation of an embodiment of a turbomachine system.

The illustrated gas turbine engine 10 includes, among other features, fuel premixers 12, fuel manifolds 13, and combustors 16. The gas turbine engine 10 may be a dual fuel gas turbine engine 10, where multiple fuel manifolds 13 supply, via fuel passageways 14, various types of fuel 15 to the fuel premixers 12. For simplicity, only one fuel manifold 13 and fuel supply 15 (and associated fuel passageways 14) is shown, but it should be understood that the illustrated gas turbine engine 10 may include multiple manifolds 13, each being configured to deliver a different type of fuel 15 through respective fuel passageways 14 to the premixers 12. For example, one type of fuel may be used for ignition (e.g., during a startup mode) and another type of fuel may be used for steady state operation of the gas turbine engine 10.

As depicted, the fuel premixers 12 route the fuel 15 (or, in the illustrated embodiment, an air-fuel mixture 18) into the combustors 16. For example, the fuel premixers 12 may initially route a mixture 18 of pilot fuel and air into the combustors 16 to start the combustion process (e.g., for an ignition process and/or startup mode), in accordance with the description above. The fuel premixers 12 may then route a mixture 18 of burn fuel and compressed air into the combustors 16 to continue the combustion process (e.g., for a burn process).

In some embodiments, as described above, the fuel premixers 12 mix the fuel 15 (e.g., received from the fuel passageways 14 extending between the fuel manifold 13 and the premixers 12) with compressed air to form an air-fuel mixture 18 for delivery to the combustors 16. The air-fuel mixture 18 may include the pilot fuel or the burn fuel, depending on the stage of combustion (e.g., ignition process or burn process). The combustors 16 may then combust the mixture 18 to generate combustion products, which are passed to a turbine 20. The combustion products expand through blades or stages of the turbine 20, causing the blades of the turbine 20 to rotate. A coupling between the blades of the turbine 20 and a shaft 22 of the gas turbine engine 10 will cause the shaft 22 to rotate with the blades. The shaft 22 is also coupled to several other components throughout the gas turbine engine 10, as illustrated, such that rotation of the shaft 22 causes rotation of the components coupled to the shaft 22. For example, the illustrated shaft 22 is drivingly coupled to a compressor 24 (which may supply the air for the air-fuel mixture 18) and a load 26. As appreciated, the load 26 may be any suitable device that may generate power via the rotational output of the gas turbine engine 10, such as an electrical generator of a power generation plant or a vehicle.

An air supply 28 may provide air to an air intake 30, which then routes the air into the compressor 24. Indeed, in some embodiments, the air supply 28 may be ambient air surrounding the gas turbine engine 10. Additionally, or in the alternate, the air supply 28 may be an oxidant, such as oxygen. The compressor 24 includes a plurality of blades drivingly coupled to the shaft 22. When the shaft 22 rotates as a result of the expansion of the exhaust gases (e.g., combustion products) within the turbine 20, the shaft 22 causes the blades of the compressor 24 to rotate, which compresses the air supplied to the compressor 24 by the air intake 30 to generate compressed air. The compressed air is routed to the fuel premixers 12 for mixing with the fuel to generate the air-fuel mixture 18, which is then routed to the combustors 16. For example, the fuel premixers 12 may mix the compressed air from the compressor 24 and the fuel 15 from one of the fuel manifolds 13 to produce the air/fuel mixture 18, as previously described. After passing through the turbine 20, the exhaust gases exit the system at an exhaust outlet 34.

As previously described, residual fuel may be left in the fuel manifolds 13 or the fuel premixers 12 after the fuel 15 is delivered to the combustors 16. For example, in dual fuel systems, the pilot fuel may be delivered to the combustors 16 via the fuel premixers 12. It may be beneficial to clear the fuel premixers 12 of the residual fuel left in the fuel premixers 12 after fuel delivery is complete, before combustion occurs in the combustor 16, or before burn fuel is routed from a different (or the same) fuel manifold 13 to the fuel premixers 12, as previously described, for delivery to the combustors 16. Thus, in accordance with the present disclosure, the gas turbine engine 10 includes a purge system 40 configured to purge residual fuel from the fuel premixers 12 to a drain pan 42, such that the residual fuel may be removed from the gas turbine engine 10. In some embodiments, the contents of the drain pan 42 (e.g., purged fuel) may be used for other purposes or reused in the gas turbine engine 10.

In the illustrated embodiment, the product purge system 40 includes bi-directional purge segments 44 (e.g., of the fuel passageways 14), discharge lines 50 extending from the bi-directional purge segments 44 at junctures 47 in the fuel passageways 14, and an eductor 46 configured to receive the discharge line(s) 50. In the illustrated embodiment, each bi-directional purge segment 44 (e.g., of the corresponding fuel passageway 14) is configured to route, during fuel delivery, fuel 15 from the fuel manifold 13 to the fuel premixer 12 in a first direction. Each bi-directional purge segment 44 (e.g., of the corresponding fuel passageway 14) is also configured to receive, during fuel purge, purged fuel 15 and air from the fuel premixer 12 in a second direction opposite to the first direction. For example, as previously described, fuel purge mode may be utilized between startup (e.g., ignition) mode and steady state mode of the gas turbine engine 10, or at any other desirable time. During fuel purge mode, compressed air from the compressor 24 may be routed through the fuel premixers 12 to purge residual fuel from the premixers 12 and into the bi-directional purge segments 44. Junctures 47 may include flow regulation devices (e.g., valves) configured to direct the purged fuel 15 and compressed air into the discharge lines 50. Additionally, or in the alternate, flow regulation devices 48 disposed on the discharge lines 50 downstream of the junctures 47 may be configured to enable the purged fuel 15 and/or air to enter and/or travel through the discharge lines 50. In other words, the portion of compressed air supplied by the compressor 24 is configured to urge residual fuel through (and out of) the fuel premixers 12, through the bi-directional purge segments 44 of the fuel passageways 14, and into the discharge line 50 (e.g., via flow regulation at the junctures 47 or via the flow regulation devices 48). Thus, the purge system 40 may purge the fuel premixers 12 and portions of the fuel passageways 14 (e.g., conduits, hoses, etc.). It should be noted that the flow regulation devices 48 may be valves configured to selectively restrict flow (e.g., to increase pressure) into and through the discharge lines 50, or the flow regulation devices 48 may be compressors or other devices configured to draw a pressure down relative to the fuel passageways 14 or bi-directional flow segments 44 thereof. Flow regulation devices at the junctures 47 may operate to enable or disable fluid communication between the bi-directional purge segment 44 and the fuel manifold 13 to disable or enable, respectively, fuel purge.

It should be noted that, in some embodiments, mini-manifolds may be disposed upstream of the fuel premixers 12, and may also be purged by the purge system 40. Further still, in some embodiments, the bi-directional purge segment 44 of the fuel passageway 14 may extend the entire length of the passageway 14 between the fuel manifold 13 and the fuel premixer 12, enabling purging of the entire fuel passageway 14 and, in some embodiments, the fuel manifold 13 itself. The presently disclosed purge system 40 is configured to purge residual fuel in any portion or component of the fuel manifolds 13, the fuel premixers 12, and/or the fuel passageways 14. Indeed, in some embodiments, the purge system 40 may additionally purge residual, unburned fuel (and/or other residual matter, such as flash residue, pollutants, etc.) from the combustors 16. Further, one of ordinary skill in the art would recognize that presently disclosed embodiments of the purge system 40 may be employed in a dual fuel gas turbine engine 10 or a single fuel gas turbine engine 10, as fuel manifolds 13 and fuel premixers 12 may be susceptible to coking of residual fuel in either configuration.

Continuing with FIG. 1, the residual fuel is discharged from the fuel premixers 12 via flow of compressed air through and out of the fuel premixers 12. A mixture of the compressed air and the purged fuel is routed through discharge line 50. However, compressed air provided by the compressor 24 is generally hot and heat from the combustors 16 may further heat the mixture of compressed air and purged fuel in the discharge line 50. The disclosed embodiments help to provide cooling to reduce the possibility of undesired combustion of the heated mixture, especially in the vicinity of the drain pan 42. Accordingly, the eductor 46 of the purge system 40 is coupled to the discharge line(s) 50 and configured to receive the mixture of compressed air and purged fuel flowing through the discharge line(s) 50. It should be noted that each of the discharge lines 50 associated with one manifold 13 and it's corresponding fuel passageways 14 may combine before reaching the eductor 46, and a combined discharge line 50 may enter a single eductor 46. However, in other embodiments, the eductor 46 may receive multiple discharge lines 50. Flow of the mixture through the discharge lines 50 and into the eductor 46 is configured to promote fluid flow from, for example, environment 58 (e.g., surrounding the gas turbine engine 10 and, more specifically, the purge system 40) into the eductor 46 through an opening 56 in the eductor 46. For example, the flow of the mixture through the discharge lines 50 and through the eductor 46 enables, via the Venturi effect, suction of fluid (e.g., air, ambient air, nitrogen) from the environment 58 (or from a different coolant source coupled with the opening 56) into the opening 56 of the eductor 46. Because the temperature of the environment 58 is substantially less than that of the gas turbine engine 10 (and, in particular, the purged fuel and compressed air mixture flowing through the discharge lines 50), the ambient air or nitrogen drawn into the eductor 46 cools the mixture. For example, the ambient air or nitrogen may be approximately 20 degrees Celsius (68 degrees Fahrenheit), and the mixture flowing through the discharge line 50 (e.g., before receiving the ambient air or nitrogen) may be approximately 426 degrees Celsius (800 degrees Fahrenheit).

To enable the above described Venturi effect, the eductor 46 (or the discharge line 50 extending up to and, in some embodiments, into the eductor 46) includes an orifice through which the flow of the mixture passes (e.g., where the orifice enables a converging section upstream or as part of the orifice, a throat at the orifice, and a diverging section downstream of the orifice). The orifice may generate a pressure drop as the mixture flows through the orifice (e.g., within or immediately adjacent the eductor 46), such that the pressure drop draws ambient air or nitrogen into the eductor 46 through the eductor opening 56 and increases a velocity of the mixture as it passes through the orifice. The ambient air or nitrogen mixes with the mixture of compressed air discharge and purged fuel, thereby cooling the mixture. The cooled mixture (e.g., including the ambient air or nitrogen) flows out of the eductor 46 and toward and into the drain pan 42. However, in some embodiments, a separator 41 may be disposed between the eductor 46 and the drain pan 42, and may be configured to separate the purged fuel from any other contents (e.g., compressed air and/or contaminants), such that the drain pan 42 only receives the purged fuel.

It should be noted, however, that the coolant drawn into the eductor 46 through the eductor opening 56 may not be ambient air. For example, a nitrogen tank (or some other coolant tank) may be coupled with the eductor opening 56, such that nitrogen (or some other coolant) is drawn into the eductor 46 via the above-described Venturi effect. Further, it should be noted that, in the illustrated embodiment, only one purge system 40 associated with one fuel manifold 13 is shown. However, as previously described, the gas turbine engine 10 may include multiple fuel manifolds 13 (e.g., 2, 3, 4, or more fuel manifolds 13), each being configured to supply a different type of fuel to the fuel premixers 12 (and, thus the combustors 16) depending on a stage or mode of operation of the gas turbine engine 10. In such embodiments, each fuel manifold 13 may include its own purge system 40, e.g., the gas turbine engine 10 may include three fuel manifolds 13 and three purge systems 40.

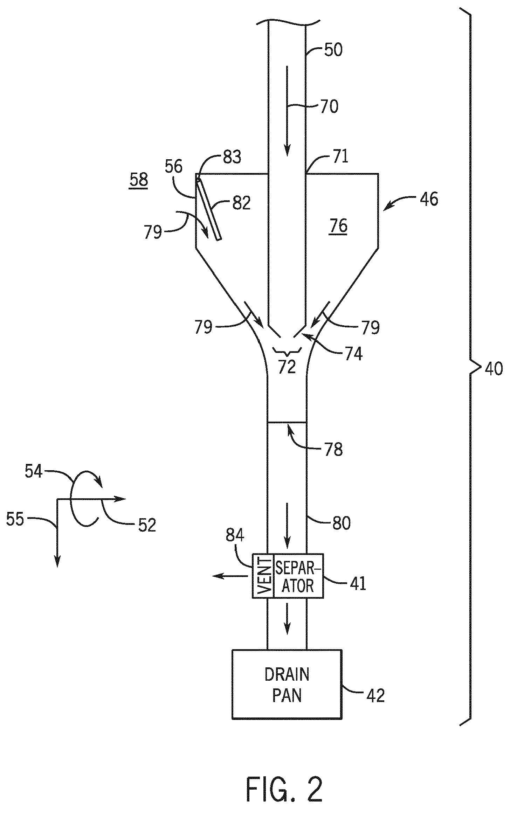

Turning now to FIG. 2, a cross-sectional view of a portion of the purge system 40 having the eductor 46 is shown. In the illustrated embodiment, a mixture 70 of the purged fuel and the compressed air is shown being routed through the discharge line 50 in direction 55, where the discharge line 50 enters the eductor 46 at an attachment point 71. As previously described, the purge system 40 may have multiple discharge lines 50 (e.g., associated with multiple fuel premixers 12 and corresponding passageways 14) and multiple corresponding attachment points 71. For simplicity, only one discharge line 50 and one attachment point 71 is shown. The mixture 70 passes through an orifice 72 (e.g., a restricted flow path) at an end 74 of the discharge line 50, where the end 74 of the discharge line 50 is disposed within an interior 76 of the eductor 46. The orifice 72 may generate a pressure drop for accelerating the mixture 70 through the orifice 72 and into the eductor 46.

As the mixture 70 passes through the orifice 72 and enters into the interior 76 of the eductor 46, the mixture 70 continues to flow in direction 55 toward an outlet 78 of the eductor 46. The mixture 70 may be biased toward the outlet 78 via gravity or, in the illustrated embodiment, via acceleration of the mixture 70 as the mixture 70 passes through the orifice 72 of the discharge line 50. However, gravity and inertia may also promote continued (or accelerated) flow of the mixture 70 toward the outlet 78 of the eductor 46.

It should be noted that the illustrated orifice 72 is a portion of the discharge line 50 extending into the eductor 46. However, in some embodiments, the discharge line 50 may coupled to the eductor 46, where the eductor 46 includes an internal flow path on the inside of the eductor 46 that couples to the discharge line 50 and includes the orifice 72. In either configuration, the mixture 70 flows into the eductor 46 and through the orifice 72, which generates the pressure drop as described above.

As the mixture 70 flows toward the outlet 78 of the eductor 46, fluid or coolant 79 (e.g., ambient air, nitrogen, etc.) is drawn into the eductor 46 through the opening 56 in the eductor 46 from the environment 58. It should be noted, however, that a different type of coolant 79 may be drawn in to the eductor 46 from a different source. For example, a coolant source (e.g., nitrogen tank) may be coupled to the opening 56, where the coolant 79 (e.g., nitrogen) is drawn in from the coolant source (e.g., nitrogen tank).

In the illustrated embodiment, the opening 56 is disposed upstream of the orifice 72 of the discharge line 50 (relative to direction 55). The coolant 79 is drawn into the eductor 46 through the opening 56 in the eductor 46 via the flow of the mixture 70 through the orifice 72. For example, a pressure drop is generated proximate to the end 74 (e.g., within the interior 76 of the eductor 46) of the discharge line 50 via the orifice 72 of the discharge line 50. To balance the pressure differential, coolant 79 from the environment 58 (or coolant source) is automatically drawn into the eductor 76 through the opening 56. The coolant 79 is drawn into a flow path of the mixture 70, such that the coolant 79 mixes with the mixture 70. The coolant 79 cools the mixture 70 as the mixture 70 travels toward the outlet 78 of the eductor 46 and into a drain line 80 of the purge system 40. The cooled mixture 70 is routed in direction 55 through the drain line 80 toward the separator 41, which separates the fuel from any other contents of the cooled mixture 70 (e.g., air). Residual contents (e.g., not the purged fuel) is vented via vent 84, and the purged fuel is routed to the drain pan 42 downstream of the separator 41 for storage or for reuse.

In some embodiments, the purge system 40 includes additional features. For example, in the illustrated embodiment in FIG. 2, the eductor 46 includes a gate 82 (or check valve, flap, or hinged door) configured to cover the opening 56 of the eductor 46 through which coolant 79 is drawn via the Venturi effect. The gate 82 may be pivotally (or otherwise) coupled to the eductor 46. In some embodiments, the gate 82 is biased to cover the opening 56 when the mixture 70 is not being purged, e.g., with a spring-loaded mechanism. For example, the gate 82 covers the opening 56 and blocks back flow of the mixture 70 through the opening 56. However, the pressure differential between the interior 76 and the environment 58 (or coolant source) that is generated by the mixture 70 flowing through the orifice 72 at the end 74 of the discharge line 50 may overcome a biasing force of the gate 82 against the opening 56. The pressure differential may urge the gate 82 to open about a hinge 83, thereby enabling coolant 79 to be drawn into the eductor 46 through the opening 56. In some embodiments, the gate 82 may be a check valve, a flap, a door, or some other mechanism that selectively seals or opens the opening 56.

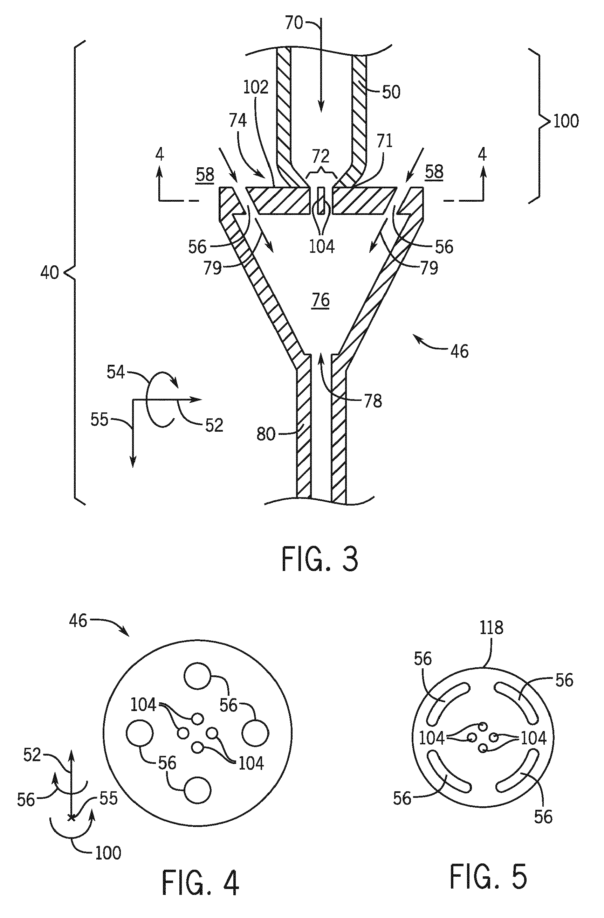

Turning now to FIGS. 3 and 4, an embodiment of the eductor 46 is shown in a cross-sectional view and a front view, respectively. For example, FIG. 3 is a cross-sectional top view of portions of the purge system 40 having the eductor 46 and FIG. 4 is a cross-sectional front view of the eductor 46 in FIG. 3, taken along line 4-4 in FIG. 3.

Focusing first on the embodiment of the purge system 40 shown in FIG. 3, the eductor 46 is shown having multiple openings 56 for drawing in coolant 79 from the environment 58 (or coolant source), where the multiple openings 56 are each disposed a radial distance 98 from an axis 99 extending through the eductor 46. Further, a portion of the discharge line 50 is shown culminating in the orifice 72 proximate the end 74 of the discharge line 50, where the orifice 72 is disposed upstream of the interior 76 of the eductor 46 with respect to direction 55. It should be noted, however, that the illustrated orifice 72 and portion of the discharge line 50 may be a component of (e.g., integrally formed with) the eductor 46. Depending on the embodiment, the illustrated orifice 72 and end 74 of the discharge line 50 may be a separate component coupled between the eductor 46 and the discharge line 50, or the orifice 72 and the end 74 may be may be a section or extension 100 of the eductor 46 that extends away from a surface 102 of the eductor 46 opposite to direction 55 toward the discharge line 50. In certain embodiments, the orifice 72 and the end 72 may be an extension 100 of the discharge line 50 that extends toward the surface 102 of the eductor 46. In other words, the illustrated extension 100 may be a separate piece from the discharge line 50 and the eductor 46, the extension 100 may be a piece of the eductor 46, or the extension 100 may be a piece of the discharge line 50 or some intervening component between the compressor discharge line 50 and the eductor 46.

The illustrated orifice 72 is configured to restrict a cross-sectional width of the flow path through which the mixture 70 (e.g., of compressed air and purged fuel) travels. The illustrated eductor 46 also includes orifice openings 104 directly downstream of the orifice 72, where the orifice openings 104 are configured to further restrict the flow path through which the mixture 70 travels. In other words, the orifice openings 104 increase the pressure differential (e.g., pressure drop, static pressure drop, static pressure differential) between the interior 76 and the environment 58 generated by the flow of the mixture 70 through the orifice 72. As the mixture 70 accelerates through the orifice 72 and the orifice openings 104 via the static pressure drop, coolant 79 is drawn into the interior 76 of the eductor 46 through the multiple openings 56 disposed through the surface 102 of the eductor 46, via the Venturi effect as previously described. The air drawn in through the openings 56 cools the mixture 70 as the mixture 70 travels into and through the drain line 80 toward the drain pan 42.

As indicated above, FIG. 4 is a cross-sectional front view of the eductor 46 in FIG. 3, taken along line 4-4. The eductor 46, as described above, includes the openings 56 for drawing in ambient air and the orifice openings 104 for generating or increasing a pressure drop in the flow of the mixture 70 through the orifice openings 104. In the illustrated embodiment, the eductor 46 includes four openings 56, each opening 56 being disposed 90 degrees away from adjacent openings 56 with respect to circumferential direction 110. The eductor 46 also includes four orifice openings 104, where each orifice opening 104 is disposed 90 degrees away from adjacent orifice openings 104 with respect to circumferential direction 110. The orifice openings 104 are aligned with the openings 56.

It should be noted that, in other embodiments, the eductor 46 may include more than four openings 56 or less than four openings 56. For example, the eductor 46 may include 1, 2, 3, 4, 5, 6, 7, 8, 9, 10 or more openings 56. The eductor 46 also include more than four orifice openings 104 or less than four orifice openings 104. For example, the eductor 46 may include 1, 2, 3, 4, 5, 6, 7, 8, 9, 10 or more orifice openings 104. Further, the eductor 46 may include a greater number of openings 56 than orifice openings 104. Alternatively, the eductor 46 may include fewer openings 56 than orifice openings 104. Furthermore, depending on the embodiment, the openings 56 may or may not be aligned with the orifice openings 104. The number of openings 56 and orifice openings 104, their positions relative to each other, and the geometry of the openings 56 and orifice openings 104 may vary depending on the amount of ambient air needed to be drawn into the eductor 46 to cool the mixture 70 (e.g., of compressed air discharge and fuel) passing through the eductor 46. For example, a cross-sectional front view of another embodiment of the eductor 46 is shown in FIG. 5, where the openings 56 are slotted (e.g., arcuate curved slots) and extend annularly around an outer perimeter 118 of the eductor 46. It should be appreciated by one of ordinary skill in the art that eductors 46 (e.g., for assisting the purge of fuel from a fuel premixer or manifold) having a different number of, or a different orientation of, the openings 56 and/or the orifice openings 104 would not materially depart from the present disclosure.

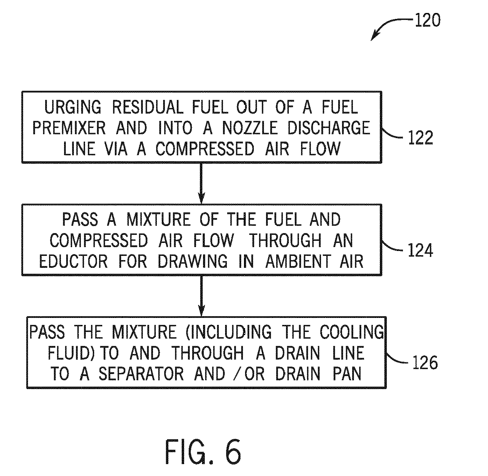

Turning now to FIG. 6, a process flow diagram of a method 120 of purging fuel from a fuel premixer or manifold is shown. The method includes urging (e.g., clearing) leftover (e.g., residual) fuel out of the fuel premixer and into a discharge line via a compressed air flow (block 122). A mixture of the compressed air flow and purged fuel is routed through the discharge line via fluid pressure from the compressed airflow. The method further includes passing the mixture through an eductor for generating a pressure drop to accelerate flow of the mixture through the eductor and draw ambient air into the eductor (block 124). For example, the eductor may include an orifice or orifice openings for generating a static pressure drop in the flow of the mixture, such that the mixture accelerates across the orifice or orifice openings. In turn, ambient air (or some other coolant) is drawn into the eductor through openings in the eductor, via the Venturi effect. The coolant (e.g., cooling fluid) cools the mixture of compressed air discharge and fuel. The method also includes passing the mixture to and through drain line to separator and/or a drain pan downstream of the separator (block 126). A vent may be disposed on the drain line (e.g., coupled to the separator) for venting separated air, coolant, and/or other contents from the mixture, such that the drain pan only collects only the purged fuel purged from the fuel premixer. However, the drain pan, in some embodiments, may collect mostly fuel, e.g., at least 70, 80, 90, 95, or 99 percent fuel, mixed with a smaller amount of cooling fluid or other contents.

In accordance with the present disclosure, embodiments are directed to a purge system for purging fuel from a fuel premixer, manifold, or conduits of a turbomachine. The purge system includes an eductor configured to draw in ambient air or nitrogen for cooling a mixture of the fuel, and a compressed air flow configured to clear the fuel from the premixers (or manifolds, conduits, passageways, or other equipment). The ambient air or nitrogen cools the mixture before the mixture is delivered to a separator and/or drain pan (where the drain pan may receive only purged fuel from the mixture), thereby reducing a risk of the mixture igniting or combusting before or after delivery to the drain pan. Disclosed embodiments of the product purge system reduce cost associated with manufacturing, storage, and operation of equipment used in traditional mechanisms.

It should be noted that the particular pressures, temperatures, and flow rates of the various flows of fluids described above may vary depending on the type, size, orientation, application, and/or function of the turbomachine. For example, the pressure of the mixture flowing into the eductor (which may be a function of the pressure of the compressed air discharge used to purge the fuel from the fuel manifold) may be in the range of approximately 50 to 500 pounds per square inch absolute (psia), 150 to 400 psia, or 250 to 300 psia. The temperature of the mixture flowing into the eductor may be in the range or approximately 400 to 850 degrees Fahrenheit (F), 500 to 750 degrees F, or 600 to 650 degrees F. The flow rate of the mixture flowing into the eductor may range from 0.08 pounds per second (lbs/sec) to 0.30 lbs/sec, 0.15 lbs/sec to 0.23 lbs/sec, or 0.18 to 0.20 lbs/sec. The max temperature of the mixture (or fuel) flowing into the drain line may be in the range of approximately 130 to 150 degrees F, 135 to 145 degrees F, or 138 to 142 degrees F.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a first fuel premixer configured to distribute a first fuel to a combustor; and
   a purge system configured to purge the first fuel from the first fuel premixer, wherein the purge system comprises:
      a discharge line configured to receive a flow of a purge mixture from the first fuel premixer;
      an orifice coupled to the discharge line, wherein the orifice is configured to constrict the flow of the purge mixture; and
      an eductor comprising an interior, an opening, and an outlet, wherein the interior is fluidly coupled to the orifice, to the opening, and to the outlet, the purge mixture is configured to flow through the interior from the orifice to the outlet, the flow of the purge mixture through the orifice is configured to, by way of the Venturi effect, draw coolant into the interior of the eductor through the opening, and the coolant drawn through the opening is configured to mix with the purge mixture.
2. The system of clause 1, wherein the eductor comprises a gate configured to cover the opening of the eductor, wherein the gate is configured to be opened via the coolant being drawn into the interior of the eductor through the opening by way of a pressure drop generated by the flow of the purge mixture from the orifice into the eductor.
3. The system of any preceding clause, comprising a fuel manifold configured to distribute the first fuel to the first fuel premixer via a fuel passageway, wherein the fuel passageway comprises a bi-directional purge segment coupled with the discharge line of the purge system at a juncture and configured to:
   enable fuel distribution to the first fuel premixer in a first condition; and
   enable fuel purge from the first fuel premixer to the discharge line in a second condition.
4. The system of any preceding clause, wherein the purge system is configured to utilize a compressed air flow to purge the first fuel from the first fuel premixer, the purge mixture comprises the purged first fuel and the compressed air flow, and the coolant is configured to cool the purge mixture.
5. The system of any preceding clause, comprising a compressor, the combustor, and a turbine, wherein the first fuel premixer delivers the first fuel to the combustor, the combustor delivers combustion products to the turbine, the turbine drives the compressor, and the compressed air flow comprises a compressor discharge air flow from the compressor.
6. The system of any preceding clause, wherein the coolant drawn into the eductor comprises ambient air or nitrogen.
7. The system of any preceding clause, wherein the purge system comprises a drain line coupled to the outlet of the eductor, a separator coupled to the drain line, and a drain tank coupled to the drain line downstream of the separator, wherein the separator is configured to separate fuel from the purge mixture and the drain tank is configured to receive the fuel.
8. The system of any preceding clause, wherein the first fuel premixer is configured to distribute a second fuel to the combustor, wherein the first fuel comprises a pilot fuel and the second fuel comprises a burn fuel.
9. The system of any preceding clause, comprising a second fuel premixer configured to distribute a second fuel to the combustor, wherein the first fuel comprises a pilot fuel and the second fuel comprises a burn fuel or the first fuel comprises the burn fuel and the second fuel comprises the pilot fuel.
10. A purge system for a turbomachine, comprising:
   a discharge line configured to receive a flow of a purge mixture from a fuel premixer;
   an orifice coupled to the discharge line, wherein the orifice is configured to constrict the flow of the purge mixture; and
   an eductor comprising:
      an interior fluidly coupled to an opening in the eductor, the orifice, and an outlet;
      the opening configured to receive a coolant; and
      the outlet, wherein the purge mixture is configured to flow through the interior from the orifice to the outlet, and the flow of the purge mixture through the orifice is configured to, by way of the Venturi effect, draw the coolant into the eductor through the opening.
11. The purge system of any preceding clause, wherein the eductor comprises a gate configured to cover the opening of the eductor, wherein the gate is configured to be opened via the coolant being drawn into the interior of the eductor through the opening by way of a pressure drop generated by the flow of the purge mixture from the orifice into the eductor.
12. The purge system of any preceding clause, wherein the gate comprises a flap, a hinged door, a check valve, or any combination thereof.
13. The purge system of any preceding clause, wherein the orifice extends into the interior along an axis of the eductor and the opening is disposed a radial spacing from the axis of the eductor.
14. The purge system of any preceding clause, comprising:
   a drain line comprising an end coupled to outlet of the eductor;
   a drain tank coupled to an opposite end of the drain line, wherein the drain line is configured to route the purge mixture to the drain tank; and
   a vent coupled to the drain line between the eductor and the drain tank, wherein the vent is configured to vent air from the purge mixture such that the drain tank collects only or mostly fuel.
15. The purge system of any preceding clause, wherein the orifice comprises a plurality of orifice openings configured to constrict the flow of the purge mixture through the orifice, wherein the orifice is configured to increase a velocity of the purge mixture into the interior.
16. The purge system of any preceding clause, wherein the purge system does not comprise a heat exchanger.
17. A purge system for a turbomachine, comprising:
   a discharge line having an orifice and configured to receive a purge mixture from a fuel premixer of the turbomachine, wherein the purge mixture comprises a fuel and compressed air from a compressor of the turbomachine; and
   an eductor coupled to the discharge line, wherein the eductor comprises at least one eductor opening for drawing in ambient air as the purge mixture flows through the orifice into the eductor.
18. The purge system of any preceding clause, wherein the orifice of the discharge line is coupled to a rear surface of the eductor, and the rear surface is opposite to an outlet configured to receive the purge mixture and the ambient air.
19. The purge system of any preceding clause, wherein the discharge line is coupled to the eductor at an attachment point upstream of the orifice relative to the flow of the purge mixture, the orifice of the discharge line is disposed within an interior of the eductor downstream of the attachment point, and the interior is fluidly coupled to the at least one eductor opening.
20. The purge system of any preceding clause, wherein the discharge line having the orifice is integrally formed with the eductor.
21. The purge system of any preceding clause, comprising:
   a drain line comprising an end coupled to an outlet of the eductor;
   a drain tank coupled to an opposite end of the drain line, wherein the drain line is configured to route the purge mixture to the drain tank; and
   a separator and vent coupled to the drain line between the eductor and the drain tank, wherein the separator is configured to separate air and non-fuel contents from the purge mixture and the vent is configured to vent the air and the non-fuel contents such that the drain pan collects only or mostly fuel.

## Claims

1. A system, comprising:
a first fuel premixer configured to distribute a first fuel to a combustor; and
a purge system configured to purge the first fuel from the first fuel premixer, wherein the purge system comprises:
a discharge line configured to receive a flow of a purge mixture from the first fuel premixer;
an orifice coupled to the discharge line, wherein the orifice is configured to constrict the flow of the purge mixture; and
an eductor comprising an interior, an opening, and an outlet, wherein the interior is fluidly coupled to the orifice, to the opening, and to the outlet, the purge mixture is configured to flow through the interior from the orifice to the outlet, the flow of the purge mixture through the orifice is configured to, by way of the Venturi effect, draw coolant into the interior of the eductor through the opening, and the coolant drawn through the opening is configured to mix with the purge mixture.

2. The system of claim 1, wherein the eductor comprises a gate configured to cover the opening of the eductor, wherein the gate is configured to be opened via the coolant being drawn into the interior of the eductor through the opening by way of a pressure drop generated by the flow of the purge mixture from the orifice into the eductor.

3. The system of claim 1 or 2, comprising a fuel manifold configured to distribute the first fuel to the first fuel premixer via a fuel passageway, wherein the fuel passageway comprises a bi-directional purge segment coupled with the discharge line of the purge system at a juncture and configured to:
enable fuel distribution to the first fuel premixer in a first condition; and
enable fuel purge from the first fuel premixer to the discharge line in a second condition.

4. The system of claim 1, 2 or 3, wherein the purge system is configured to utilize a compressed air flow to purge the first fuel from the first fuel premixer, the purge mixture comprises the purged first fuel and the compressed air flow, and the coolant is configured to cool the purge mixture.

5. The system of any of claims 1 to 4, comprising a compressor, the combustor, and a turbine, wherein the first fuel premixer delivers the first fuel to the combustor, the combustor delivers combustion products to the turbine, the turbine drives the compressor, and the compressed air flow comprises a compressor discharge air flow from the compressor.

6. The system of any preceding claim, wherein the purge system comprises a drain line coupled to the outlet of the eductor, a separator coupled to the drain line, and a drain tank coupled to the drain line downstream of the separator, wherein the separator is configured to separate fuel from the purge mixture and the drain tank is configured to receive the fuel.

7. The system of any preceding claim, wherein the first fuel premixer is configured to distribute a second fuel to the combustor, wherein the first fuel comprises a pilot fuel and the second fuel comprises a burn fuel.

8. The system of any preceding claim, comprising a second fuel premixer configured to distribute a second fuel to the combustor, wherein the first fuel comprises a pilot fuel and the second fuel comprises a burn fuel or the first fuel comprises the burn fuel and the second fuel comprises the pilot fuel.

9. A purge system for a turbomachine, comprising:
a discharge line configured to receive a flow of a purge mixture from a fuel premixer;
an orifice coupled to the discharge line, wherein the orifice is configured to constrict the flow of the purge mixture; and
an eductor comprising:
an interior fluidly coupled to an opening in the eductor, the orifice, and an outlet;
the opening configured to receive a coolant; and
the outlet, wherein the purge mixture is configured to flow through the interior from the orifice to the outlet, and the flow of the purge mixture through the orifice is configured to, by way of the Venturi effect, draw the coolant into the eductor through the opening.

10. The purge system of claim 9, wherein the eductor comprises a gate configured to cover the opening of the eductor, wherein the gate is configured to be opened via the coolant being drawn into the interior of the eductor through the opening by way of a pressure drop generated by the flow of the purge mixture from the orifice into the eductor.

11. The purge system of claim 9 or 10, wherein the orifice extends into the interior along an axis of the eductor and the opening is disposed a radial spacing from the axis of the eductor.

12. The purge system of claim 9, 10 or 11, comprising:
a drain line comprising an end coupled to outlet of the eductor;
a drain tank coupled to an opposite end of the drain line, wherein the drain line is configured to route the purge mixture to the drain tank; and
a vent coupled to the drain line between the eductor and the drain tank, wherein the vent is configured to vent air from the purge mixture such that the drain tank collects only or mostly fuel.

13. A purge system for a turbomachine, comprising:
a discharge line having an orifice and configured to receive a purge mixture from a fuel premixer of the turbomachine, wherein the purge mixture comprises a fuel and compressed air from a compressor of the turbomachine; and
an eductor coupled to the discharge line, wherein the eductor comprises at least one eductor opening for drawing in ambient air as the purge mixture flows through the orifice into the eductor.

14. The purge system of claim 13, wherein the orifice of the discharge line is coupled to a rear surface of the eductor and/or is integrally formed with the eductor, and the rear surface is opposite to an outlet configured to receive the purge mixture and the ambient air.

15. The purge system of claim 13 or 14, wherein the discharge line is coupled to the eductor at an attachment point upstream of the orifice relative to the flow of the purge mixture, the orifice of the discharge line is disposed within an interior of the eductor downstream of the attachment point, and the interior is fluidly coupled to the at least one eductor opening.
